# EUROPEAN PATENT SPECIFICATION

(11) **EP 4 569 016 B1**
(45) Date of publication and mention of the grant of the patent: **18.02.2026**
(21) Application number: 24761675.8
(22) Date of filing: 21.08.2024
(51) Int. Cl.: C08H 7/00, C07G 1/00, C08L 97/00, D21C 11/00

(54) **METHOD FOR LIGNIN PURIFICATION**
VERFAHREN ZUR REINIGUNG VON LIGNIN
PROCÉDÉ DE PURIFICATION DE LIGNINE

(30) Priority: 21.08.2023 FI 20235930
(43) Date of publication of application: 18.06.2025
(73) Proprietor: Ligneasy Oy, 00130 Helsinki (FI)
(72) Inventor: ENQVIST, Eric, 00130 Helsinki (FI); ANTTILA, Topias, 00130 Helsinki (FI); KARPALE, Juho-Matti, 00130 Helsinki (FI)
(74) Representative: Laine IP Oy
(86) International application number: PCT/FI2024/050431
(87) International publication number: WO 2025/040845

(56) References cited:
- WO-A1-2020/161397
- HOU MINJIE ET AL: "Xylanase-assisted adsorption process for high purity sugar stream development from hydrolysis liquor of kraft-based dissolving pulp production process", INDUSTRIAL CROPS AND PRODUCTS, ELSEVIER, NL, vol. 200, 8 May 2023 (2023-05-08), XP087325004, ISSN: 0926-6690, [retrieved on 20230508], DOI: 10.1016/J.INDCROP.2023.116806

## Description

### FIELD

The present invention relates to lignin purification. In particular, the present invention relates to concentrating lignin salts.

### BACKGROUND

Lignin is produced during papermaking as a side stream. Typically, the lignin fraction is burned as fuel but it could also be used for replacing fossil oil based materials. Such use requires high purity lignin.

Typically, lignin is purified from black liquor by precipitation and/or filtration. Lignin precipitation requires lowering the pH, which may lead to unwanted side reactions or co-precipitation. Direct filtration of black liquor on the other hand is difficult because of membrane fouling and concentration polarization. Especially, achieving a high concentration of lignin is difficult with the known methods. Typically, a large amount of water or solvents needs to be evaporated, which is costly and time consuming. In addition, concentrated lignin solutions tend to have high viscosity making their processing challenging.

One method for the preparation of lignin concentrate has been recently described in WO2020161397. This method takes advantage of formation of alkali lignin agglomerate colloids. A large size of such colloids enables using large-pore membrane filtration. However, the formed lignin particles can only be concentrated only up to ~20% dry solids, because the yielding concentrate has a very high viscosity. A higher lignin concentration with lower viscosity would be advantageous for the efficient use of the purified lignin salt in further processes.

### SUMMARY OF THE INVENTION

The invention is defined by the features of the independent claims. Some specific embodiments are defined in the dependent claims. It is the aim of the invention to overcome at least some of the drawbacks relating to the known state-of-the-art technical solutions described in the background section.

According to a first aspect of the present invention, there is provided a method for concentrating lignin comprising the steps of providing a solution comprising alkali lignin agglomerate colloids, increasing the pH of the solution, and concentrating the solution to form a lignin salt concentrate.

According to a second aspect of the present invention, there is provided a product obtainable by the first aspect of the invention.

### Advantages of the invention

An advantage of the present invention is that lignin agglomerate colloids may be concentrated to high concentrations, which leads to lowered costs for example in transportation and storage of the material.

A further advantage of the invention is that the lignin particles are in the form of agglomerate colloids, which allows the use of large-pore membrane filtration. Such filtration is beneficial because it is less susceptible for clogging and concentrating may be faster than with smaller pore sizes.

Another advantage of the invention is that the viscosity of the concentrated alkali lignin agglomerate colloids remains at a reasonable level. This simplifies handling of the product and makes it more suitable for further processes.

Another advantage of the present invention is that the disclosed method avoids the formation of solids, which is typically seen with attempts to concentrate lignin salt solutions.

Another advantage of the present invention is that the obtained product is compatible with phenolic resin formulations at high lignin content.

Another advantage of the present invention is that it reduces or eliminates the need for separate alkali addition in production of phenolic resin comprising lignin.

Another advantage of the present invention is that it removes the need for an alkaline dissolution step that is needed when lignin from processes using final purification with H₂SO₄, such as the so-called "LignoBoost" process, is used in production of alkaline phenolic resin.

Another advantage of the present invention is that it removes the risk of dust explosions that potentially may take place when water insoluble H₂SO₄ purified lignin is dried for transportation. A high concentration liquid product obtained with the present invention is easy to transport, and safe from explosions.

Another advantage of the present invention is that the purified lignin salt remains in liquid form enabling thermochemical modifications of lignin in an aqueous system.

### BRIEF DESCRIPTION OF THE DRAWINGS

FIGURE 1 illustrates alkalization of lignin agglomerate colloid solution.
FIGURE 2 illustrates alkalization of filtered and unfiltered lignin agglomerate colloid solutions. SW = softwood

### EMBODIMENTS

In the present context, the term "lignin agglomerate colloid" refers to lignin particles that have clustered into a colloidal structure. The particle size of lignin agglomerate colloids may be at least 50 kDa. The agglomerate lignin colloids may be at least about ten times larger than the lignin macromolecules originating from black liquor (typically 5 kDa).

In the present context, a "dilution liquid" is an aqueous liquid having no significant ionic strength or significant amount of dissolved organic material. For example, the dilution liquid may be an aqueous liquid comprising less than 0.5 mol/L of sodium ions. In addition to plain water, examples of dilution liquids commonly occurring in pulp mills include for example condensate from an evaporation plant, filtrate from a bleach plant, or mill hot water.

In the present context, the term "large-pore membrane filtration" refers to cross-flow filtration of particles formed of agglomerated lignin macromolecules. The cutoff point of the large-pore membrane may be at least 40 000 Dalton. Advantageously, the cutoff point in a large-pore membrane filtration according to the present invention may be in the range of 40 000-500 000 Da, preferably 50 000-200 000 Da.

In the present disclosure the term "lignin salt" refers to a chemical form of lignin, in which part of the acid groups in lignin are dissociated and the negative charge of the dissociated acid groups is counterbalanced by cations. The lignin salt may involve various cations, but typically there is one principal cation, which is the same as the cation of that alkaline pulping process, where the lignin salt originates from. In case of Kraft lignin salt, the primary cation is sodium (Na⁺).

The viscosity measurements were performed using a rotational viscometer, specifically the Brookfield viscometer at a temperature of 50°C. The used spindle was a disc spindle, and the rotation speed was 100 rpm. The spindle was carefully immersed into the sample, which had been preheated to the desired temperature, and the measurement process was initiated. As a result of this analysis, the viscosity value of the sample was obtained, expressed in centipoises (cP), which is equivalent to millipascal-seconds (mPa·s).

The present disclosure describes a method for lignin purification. It has been surprisingly found that increasing the pH of a solution comprising alkali lignin agglomerate colloids may allow concentrating the colloids to a high concentration. The method may comprise the steps of providing a solution comprising alkali lignin agglomerate colloids, increasing the pH of the solution, and concentrating the solution to form a lignin salt concentrate.

pH may be increased by any suitable methods. In some embodiments, a base is added either as a liquid or as a solid. Base may be selected from any available bases. The base may be for example an alkali hydroxide, ammonia, a basic oxide, such as sodium oxide, or an alkali metal carbonate. In one embodiment, the pH may be increased by addition of at least one alkali hydroxide. In preferred embodiments, the alkali hydroxide may be selected from the group comprising sodium hydroxide, potassium hydroxide, lithium hydroxide and combinations thereof. In some embodiments, the alkali hydroxide is potassium hydroxide. In some embodiments, the pH may be increased by addition of basic side stream effluent solutions, such as oxidized white liquor and/or white liquor produced in Kraft pulping process.

In some embodiments, the amount of added alkali hydroxide is less than 50 wt-%, such as less than 30 wt-%, calculated from the dry weight of alkali lignin agglomerate colloids.

The pH of the solution comprising alkali lignin agglomerate colloids is basic. For example, the pH of the solution comprising the alkali lignin agglomerate colloids may range from 8.5 to 10.5, such as less than 11.

According to the present disclosure, in some embodiments, the pH of the solution comprising alkali lignin agglomerates may be increased to at least 11, such as to at least 11.1, 11.2 or 11.5, preferably to at least 12, to at least 12.5 or to at least 13. In some examples, the pH may be in the range of 12 to 14, for example in the range of 13 to 14. The increased pH allows concentrating lignin agglomerate colloids to higher concentrations than what is practical at lower pH. Importantly, lignin particles may maintain their colloidal state at the above-mentioned pH, which allows using large-pore membrane filtration during the concentrating step. Typically, the solution comprising lignin agglomerate colloids is an aqueous solution.

Concentrating of the solution may be performed by any suitable method for increasing the concentration of a solution. The lignin salt concentrate may remain in liquid form. In some embodiments, the concentrating step is performed by evaporation, filtration, such as membrane filtration, or combinations thereof. In some examples, electrodialysis may be utilized for the concentrating step. The size of alkali lignin agglomerate colloids is such that it allows filtration with a large-pore membrane. An advantage of using large-pore membrane filtration is that any small molecule impurities in the solution may be removed as they pass through the membrane while the alkali lignin agglomerate colloids are retained. Additionally, large-pore membrane filtration is less susceptible for clogging and may be faster to perform than filtration with a filter typically employed for lignin concentration. Thus, in some preferred embodiments, the concentrating step is performed by membrane filtration, wherein the nominal cut-off value of the membrane is at least 40 kDa. In some preferred embodiments, the cut-off value of the membrane is in the range of 50 - 200 kDa. Membranes with large pores are easier to operate than membranes with small pores (for example membranes with pores below 5 kDa). The membrane may be constructed from any suitable material, such as polytetrafluoroethylene (PTFE), polypropylene (PP), polyethylene (PE), polyethersulfone (PES), polyvinylidene difluoride (PVDF), glass fiber, cellulose acetate, nitrocellulose, and/or nylon

In some embodiments, the concentrating step is performed using equipment specifically designed for high viscosity fluids. Such equipment may function under elevated pressure or have means for pumping or mixing the solution. The viscosity of the formed lignin salt concentrate may in some embodiments be sufficiently low so that the lignin salt concentrate may be transferred with equipment specifically designed for high viscosity fluids. In other embodiments, the viscosity of the lignin salt concentrate may be sufficiently low so that no special equipment for high viscosity fluids is needed.

Typically, concentrating alkali lignin agglomerate colloids without first increasing the pH of the solution results in a concentrate with a very high viscosity, for example above 40 000 mPas as measured with Brookfield viscometer at 50 °C, 100 rpm and spindle number 7. The Brookfield viscometer rotates a disc or cylinder in a fluid sample and measures the torque needed to overcome the viscous resistance to the induced movement. Increasing the pH of the solution comprising alkali lignin agglomerate colloids before the concentrating step results in lower viscosity of the formed concentrate. Preferably, pH is increased to at least 11, such as at least 12 before the concentrating step. In some preferred examples, the viscosity of the formed lignin salt concentrate may be below 40 000 mPas, such as below 35 000 mPas, below 30 000 mPas, below 25 000 mPas or below 20 000 mPas as measured with Brookfield viscometer at 50 °C, 100 rpm and with spindle number 7. The inventors have observed that when potassium hydroxide is used as a base, the lignin salt concentrate may have surprisingly low viscosities. The lignin salt concentrate may have for example viscosity below 10 000 mPas, such as below 8 000 mPas as measured with Brookfield viscometer at 50 °C, 100 rpm and spindle number 4, 5 or 6. In some examples, the viscosity of the lignin salt concentrate is above 500 mPas, such as above 1000 mPas as measured with Brookfield viscometer at 50 °C, 100 rpm and spindle number 4.

The method disclosed herein may be suitable for any solution comprising alkali lignin agglomerate colloids. In some embodiments, the dry solids content of the solution comprising the alkali lignin agglomerate colloids may be in the range of 10 to 25 wt-%, such as 15 to 23 wt-%, preferably in the range of 18 to 20 wt-%. For example, the dry solids content of the solution comprising the alkali lignin agglomerate colloids may be below 20 wt-%, such as below 15 wt-%. In preferred embodiments, at least 60 wt-%, such as at least 70 wt-%, 80 wt-% or at least 90 wt-% of the dry solid content of the solution comprising alkali lignin agglomerate colloids may consist of alkali lignin agglomerate colloids. After the concentrating step, the dry solid content of the lignin salt concentrate may be at least 30 wt-%, for example at least 35 wt-%, at least 40 wt-% or at least 50 wt-%. In some embodiments, at least 40 wt-% such as at least 50 wt-%, at least 60 wt-% or at least 70 wt-% of the solids in the lignin salt concentrate comprises or consists of lignin. For example, a lignin salt concentrate, wherein the solid content is 50 wt-%, may comprise 72 wt-% of lignin.

In some examples, the dry solids content of the lignin salt concentrate may be at least 30 wt-% and the viscosity may be below 40 000 mPas, such as below 20 000 mPas, measured with Brookfield viscometer at 50 °C, 100 rpm and with spindle number 7. For example, the dry solids content of the solution comprising the alkali lignin agglomerate colloids may be at least 50 wt-%, such as at least 35 wt-%, and the viscosity may be below 10 000 mPas, such as below 8 000 mPas, measured with Brookfield viscometer at 50 °C, 100 rpm and spindle number 4, 5 or 6. In some embodiments, the viscosity of the lignin salt concentrate may be below 40 000 mPas, such as below 35 000 mPas, measured with Brookfield viscometer at 50 °C, 100 rpm and typically with spindle number 7, and the dry solid content may be at least 30 wt-%.

Alkali lignin agglomerate colloids may be formed by different methods. In one embodiment, the solution comprising alkali lignin agglomerate colloids may be formed by the following steps: an alkaline spent liquor from chemical cooking of lignocellulosic raw material is provided and the pH of the spent liquor is decreased. Then, the spent liquor is filtered to form a filter cake comprising lignin and finally the filter cake is mixed into a dilution liquid to form a solution comprising alkali lignin agglomerate colloids. In some embodiments, the pH of the spent liquor may be decreased to 9 - 10.5. In preferred embodiments, the pH may be decreased by addition of CO₂. In some embodiments, the dilution liquid may be an aqueous solution or water.

In other embodiments, the formed solution comprising the alkali lignin agglomerate colloids is further subjected to a membrane filtration with a membrane having a nominal cut-off value of at least 40 kDa prior to increasing the pH of the solution. In some preferred embodiments, the cut-off value of the membrane is in the range of 50 - 200 kDa. It is important to note that here, without increasing the pH of the solution as explained above, a solution comprising alkali lignin agglomerate colloids may typically be concentrated only to 20 -25 % dry solid content because of high viscosity of the formed concentrate. It has been observed that when the solution comprising lignin agglomerate colloids is subjected to membrane filtration with a membrane having a nominal cut-off value of at least 40 kDa prior increasing the pH of the solution, the amount of alkali needed for increasing the pH of the solution is reduced leading to reduced production costs.

The lignin salt concentrate may be in some embodiments subjected to oxidation. Oxidation of lignin salt concentrate may allow reducing the pH of the solution for example to pH below 9, while maintaining lignin particles in soluble form. Thus, in some embodiments, the lignin salt concentrate is subjected to oxidation under an oxygen over pressure of below 20 bars, such as in the range of 5 to 15 bars or in the range of 8 to 12 bars. For example, oxidation may be performed by using oxygen gas under an O₂ pressure of less than 20 bars, such as less than 15 bars.

In some examples, the temperature of the lignin salt concentrate may be adjusted to less than 100 °C prior to the oxidation. The temperature may be adjusted for example to 60 to 80 °C prior to the oxidation.

After the oxidation, the pH of the lignin salt concentrate may be lowered to below 9, such as to pH in the range of 4 to 8 while maintaining lignin in soluble form. pH may be lowered for example by addition of an acid, such as sulfuric acid, or by addition of gas, such as CO₂.

Thus, in one example, the pH of a solution comprising lignin agglomerate colloids may be first increased to pH ranging from 12 to 14, the solution may then be concentrated to at least 30 wt-%, after which the lignin may be oxidized under an oxygen over pressure of 10 to 15 bars and finally the pH may be lowered to below 9, such as to pH in the range of 5 to 8. Such method allows production of a lignin product that has high concentration and high solubility at a pH that is suitable for different applications.

In some embodiments, the lignin salt concentrate may be dried to dry solid content of at least 90 wt-%, such as at least 95 wt-%. Drying may be performed for example by evaporation or by spray drying. For example, the lignin salt concentrated may be dried by evaporation at temperature in a range of 50 to 150 °C, such as in the range of 80 to 120 °C. In some examples, the drying by evaporation may be performed under reduced pressure. Spray-drying may be performed by utilizing heated air, such as air heated to 150 to 350 °C, or 180 to 250 °C. In some examples the temperature of air may be 200 °C or less.

Another aspect of the present disclosure is a product obtainable by the above disclosed method. One advantage of the product is that it typically does not have a strong smell. Typically, the product comprises only low amounts or no guaiacol and/or sulphur containing compounds, such as dimethyl sulphide, dimethyl disulphide and/or dimethyl trisulphide. Therefore, the product can be used in different consumer products, where lignin is needed, without bringing an unpleasant smell to them. Examples of such products comprising lignin include for example phenol formaldehyde resin (PF-resin). The product may be especially advantageous for applications utilizing NaOH as a catalyst.

In some embodiments, the dry solid content of the product may be at least 30 wt-%, for example at least 35 wt-%, at least 40 wt-% or at least 50 wt-%. In some embodiments, at least 40 wt-%, such as at least 50 wt-%, at least 60 wt-%, or at least 70 wt-% of the dry solids of the product comprises lignin. For example, the dry solid content of the product may be in the range of 30 to 98 wt-%, or in the range of 40 to 80 wt-%. In some examples, the dry solid content of the product concentrated by membrane filtration may be for example 30 to 45 wt-%, such as 35 to 40 wt-%. In other example, the product may be further concentrated to a dry solid content of 50-95 wt-% by evaporation or spray drying.

In other embodiments, the pH of the product is above 11, such as at least 12, at least 12.5, at least 13 or at least 13.5.

The product obtained with the method may be a lignin salt, typically a sodium salt of lignin. In some examples, the product comprises or consists of alkali lignin agglomerate colloids.

In other embodiments, the viscosity of the product is below 40 000 mPas as measured with Brookfield viscometer at 50 °C, 100 rpm and spindle number 7. The viscosity of the product may be for example below 35 000 mPas, below 30 000 mPas or below 25 000 mPas as measured with Brookfield viscometer at 50 °C, 100 rpm and spindle number 7. In some embodiments, the viscosity of the product may be below 10 000 mPas, such as below 8 000 mPas measured with Brookfield viscometer at 50 °C, 100 rpm and spindle number 4-6. In some embodiments, the viscosity of the product may be below 40 000 mPas, such as below 35 000 mPas, measured with Brookfield viscometer at 50 °C, 100 rpm and typically with spindle number 7, and the dry solids content may be at least 30 wt-%.

### Examples

### Example 1

The pH of softwood kraft black liquor was decreased to 10.0 using CO₂ at 60°C to precipitate lignin. The lignin precipitate suspension was filtered to obtain a kraft lignin filter cake with 57% dry matter content. The lignin filter cake was mixed with deionized water to form a lignin agglomerate colloid at 10% dry solids content. The lignin agglomerate colloid volume was pre-filtered and subjected to large-pore membrane filtration using Alfa Laval- GR51PP 50 kDa cut-off membrane. The large-pore membrane filtration was carried out at 50°C to reach volume reduction Vr = 0.7 (Vr = Vpermeate/Vinitial).

### Example 2.

A solution comprising alkali lignin agglomerate colloids prepared with the method described in example 1 with 21% dry solids content, a viscosity of 36 mPas measured with Brookfield viscometer at 50 °C, 100 rpm and spindle nr 4, and a pH of 9 was subjected to evaporation. The evaporation test was carried out at 80°C under vacuum. The resulting oven dry solids concentration was 30.8 % and viscosity of the concentrate was over 40 000 mPas measured with Brookfield viscometer at 50 °C, 100 rpm and spindle number 7. The final pH was 9.3.
100% of the dry solids in the solution comprising alkali lignin agglomerate colloids was recovered in the concentrate, while approximately 40% of the water was evaporated and collected as condensate. The results of Example 1 indicates that approx. 30% dry solids content is the maximum for direct evaporation based concentrating due to increasing viscosity. More detailed results are shown in Table 1 below.

**Table 1.**

| | **Feed** | **Concentrate** |
|---|---|---|
| **Dry solids content, %** | 21.0 | 30.8 |
| **pH** | 9 | 9.3 |
| **Viscosity, mPas @50°C** | 36 | >40 000 |

### Example 3.

A solution comprising alkali lignin agglomerate colloids prepared with the method described in example 1 with 21% dry solids content, a viscosity of 36 mPas with Brookfield viscometer at 50 °C, 100 rpm and spindle nr 4, and a pH of 9 was mixed with 50 w-% NaOH solution to achieve a pH of 12.7 and subjected to evaporation. The evaporation test was carried out at 80°C under vacuum pressure. The resulting oven dry solids content of the concentrate was 50.9% and viscosity of the concentrate was 30 000 mPas measured with Brookfield viscometer at 50 °C, 100 rpm and spindle number 7. The final pH was 13.13.
100% of the dry solids in the solution comprising alkali lignin agglomerate colloids was recovered in the concentrate, while approximately 2/3 of the water was evaporated and collected as condensate. The concentrate's dry solids content was 50.9% and viscosity was 30 000 mPas, compared to 30.8% and >40 000 mPas in the evaporated concentrate of Example 2. The results of Example 3 indicate that a considerable further concentration of alkaline lignin salt was achieved while maintaining the viscosity at a reasonable level by alkalizing the concentrate with NaOH and subjecting it to evaporation. More detailed results are shown in Table 2 below.

**Table 2.**

| | **Feed** | **Concentrate** |
|---|---|---|
| **Dry solids content, %** | 21.0 | 50.9 |
| **pH** | 9 | 13.13 |
| **Viscosity, mPas @50°C** | 36 | 30 000 |

### Example 4.

A solution comprising alkali lignin agglomerate colloids prepared with the method described in example 1 with 21% dry solids content, a viscosity of 36 mPas with Brookfield viscometer at 50 °C, 100 rpm and spindle nr 4, and a pH of 9 was mixed with 50 w-% KOH solution to achieve a pH of 13.55 and subjected to evaporation. The evaporation test was carried out at 80°C under vacuum pressure. The resulting oven dry solids content of the concentrate was 49.0 % and viscosity of the concentrate was 6500 mPas measured with Brookfield viscometer at 50 °C, 100 rpm and spindle number 6. The final pH was 13.96.
100% of the dry solids of the solution comprising alkaline lignin agglomerate colloids was recovered in the concentrate, while approximately 2/3 of the water was evaporated and collected as condensate. The concentrate's dry solids content and viscosity was 49.0% and 6500 mPas, compared to 30.8% and >40 000 mPas in the evaporated concentrate of Example 2. The results of Example 4 indicate that a considerable further concentration of lignin salt concentrate was achieved while maintaining the viscosity at a desirable level by alkalizing the concentrate with KOH and subjecting it to evaporation. More detailed results are shown in Table 3 below.

**Table 3.**

| | **Feed** | **Concentrate** |
|---|---|---|
| **Dry solids content, %** | 21.0 | 49.0 |
| **pH** | 9 | 13.96 |
| **Viscosity, mPas @50°C** | 36 | 6500 |

Examples 2, 3 and 4 demonstrate that alkalizing alkali lignin agglomerate colloids (as prepared with the method disclosed in example 1), enables agglomerates to be further concentrated by evaporation up to 50% dry solids content while maintaining the viscosity at a desired level. The desired level of viscosity means that from a processing point of view, the fluid is transferrable, for example by pumping.

### Example 5

A solution consisting of alkaline lignin agglomerate colloids prepared with the method described in example 1 with 21% dry solids content was alkalized with 50 w-% NaOH solution with alkali charge of 17% NaOH (dry) of dry solids and subjected to large-pore membrane filtration test using Nadir UH050 50 kDa cut-off membrane. The test was carried out at 60°C and continued until volume reduction Vr = 0.47 was reached (Vpermeate/Vinitial). The resulting oven dry solids concentrations in the concentrate and permeate volumes were 30.3% and 6.5%, respectively.
93% of the original dry solids in the feed was recovered in the concentrate. Dry solids content in the concentrate was 30.3% compared to 21.0% in the feed. The viscosity of the concentrate was 60 mPas measured with Brookfield viscometer at 50 °C, 100 rpm and spindle number 4. The sodium balance results showed that the same amount of sodium (Na⁺) was obtained into permeate stream compared to the feed. The results of example 5 indicate that considerable further concentration of lignin salt concentrate was achieved. Importantly, viscosity of the concentrate remained roughly at the same level as in the feed. Further, the potential pulp mill sodium balance disruption was eliminated by alkalizing the concentrate with NaOH and repeating the large-pore membrane filtration. The increase in sodium concentration into filtration results in a permeate containing the same amount of sodium as that of the original feed. Detailed results are shown in Table 4 below.

**Table 4.**

| | **Feed** | **Permeate** | **Concentrate** |
|---|---|---|---|
| **Dry solids content, %** | 21.0 | 6.5 | 30.3 |
| **Sodium (Na+) content (kg)** | 0.1 | 0.1 | |
| **Viscosity, mPas @50°C** | 36 | | 60 |

Examples 2 - 5 demonstrate that a solution of alkali lignin agglomerate colloids can be concentrated to a considerably higher dry solids content when it is treated with alkali, for example either NaOH or KOH, and subjected to either evaporation or large-pore membrane filtration with 50 kDa cut-off membrane. Further, example 5 demonstrates that the effect of lignin separation by large-pore membrane filtration on pulp mills sodium balance may be eliminated by alkali addition to purified alkalilignin salt concentrate and further concentrating. Methods described herein allow further concentration of the purified alkalilignin salt concentrate and may provide water balance benefits and eliminate the disruption of pulp mill sodium balance.

### Example 6

pH of softwood (SW) kraft black liquor was decreased to <11 using CO₂ at 60°C to precipitate lignin. The lignin precipitate suspension was filtered to obtain a kraft lignin filter cake with ~60% dry matter content. The lignin filter cake was mixed with deionized water to form a lignin agglomerate colloid at ~10% dry solids content. The lignin agglomerate colloid solution was pre-filtered to remove particles with a size of >150 µm.

### Example 7

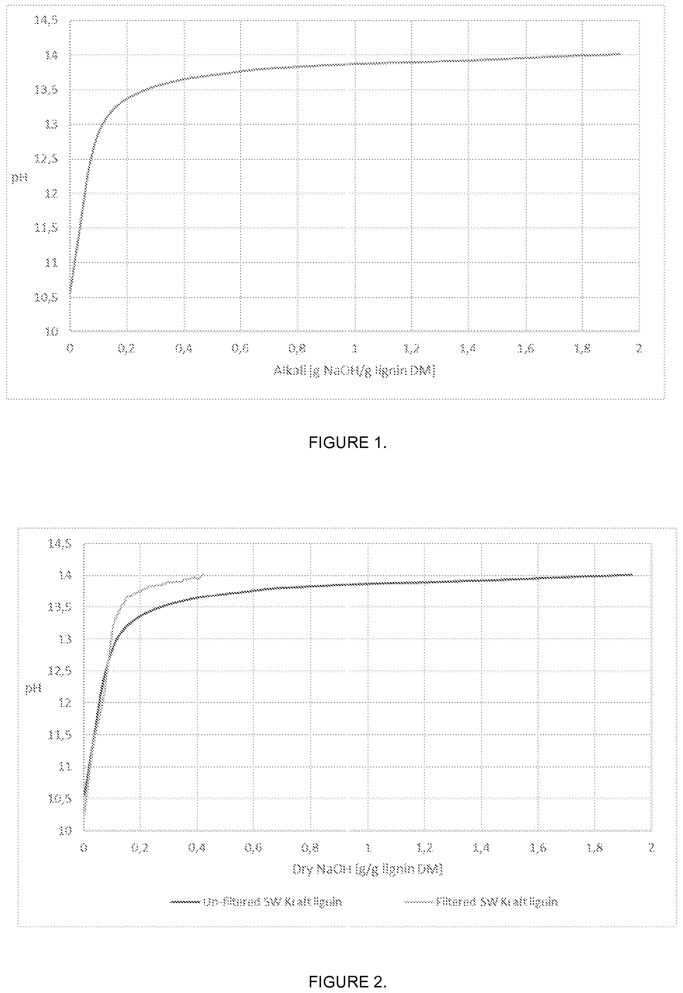

A solution comprising alkali lignin agglomerate colloids prepared with the method described in example 6 with ~10% dry solids content, was subjected to alkalization with NaOH to adjust its pH to 14. The alkali consumption at pH 13 was 0.12 g NaOH per gram of lignin dry matter, and at pH 14, it was 1.9 g NaOH per gram of lignin dry matter, respectively (Figure 1).

### Example 8

A solution comprising alkali lignin agglomerate colloids prepared with the method described in example 6 with ~10% dry solids content, was subjected to large-pore membrane filtration using Koch SaniPro UF 50 kDa cut-off membrane to increase its purity while increasing dry solids content to 23%. The large-pore membrane filtration was carried out at 50°C to reach volume reduction Vr = 0.7 (Vr = Vpermeate/Vinitial).

### Example 9

The solution with 23% dry solids content prepared with the method of Example 8, was subjected to alkalization with NaOH to adjust its pH to 14. In example 7, the consumption of alkali at pH 13 was 0.12 g NaOH per gram of lignin dry matter, and at pH 14, it was 1.9 g NaOH per gram of lignin dry matter, respectively. After the purification and concentration treatment in this example, the alkali consumption in pH adjustment was lower compared to example 7. The alkali consumption at pH 13 was 0.08 g NaOH per gram of lignin dry matter, and at pH 14, it was 0.41 g NaOH per gram of lignin dry matter, respectively (figure 2, table 1). The difference is significant, as at pH 13, the alkali consumption on unwashed lignin was 1.5 times that of washed lignin, and correspondingly, at pH 14, it is almost five times higher.

**Table 1. Alkali consumption of purified and unpurified lignin agglomerate colloid solutions at pH 13-14.**

| | **Alkali consumption [g NaOH/g lignin dry matter]** | |
|---|---|---|
| pH | Unfiltered lignin agglomerate colloids | Filtered lignin agglomerate colloids |
| 13 | 0.12 | 0.08 |
| 13.5 | 0.27 | 0.13 |
| 14 | 1.9 | 0.41 |

### Example 10

A purified alkali lignin agglomerate solution prepared with the method described in Example 8, was subjected to acidification with sulfuric acid to adjust its pH to 5, and to filtration at 40°C and pressure up to 4 bar to examine the formation of solid particles when lowering the pH, i.e., whether the lignin will be soluble or not at pH 5. In the experiment, the lignin precipitated intensively, forming a structure in which it could not be filtered. Approximately half of the sample penetrated through the filter after it was clogged. No filter cake was obtained since part of the sample liquid remained in the filter chamber (table 2).

**Table 2. Filtration of purified lignin agglomerate at pH 5.**

| | |
|---|---|
| Sample weight, g | 251.4 |
| Filtration time, min | 60 |
| Filtrate out, g | 119.1 |
| Filter cake, g | - |

### Example 11

A purified alkali lignin agglomerate solution prepared with the method described in example 8 with 23% dry solids content (pH <11), was subjected to alkali-O₂ oxidation. First, the purified alkali lignin agglomerate was alkalized with NaOH to obtain a solution with pH 13, after it was transferred to the oxidation reactor. The reactor was pressurized with oxygen to a pressure of 10 bar. Following this, the temperature was raised to 80°C, where it was maintained for 90 minutes, after which it was cooled to room temperature.
Oxidized alkali lignin agglomerate solution was subjected to acidification with sulfuric acid to adjust its pH to 5, and to filtration at 40°C and pressure up to 4 bar to examine the formation of solid particles when lowering the pH, i.e., whether the lignin will be soluble or not at pH 5. In the experiment, the solution passed entirely through the filter, unlike in example 10 where precipitated lignin clogged the filter (table 3). This demonstrates that by using the method described herein, purified and oxidized alkali lignin agglomerates do not precipitate when the pH is lowered to 5.

**Table 3. Filtration of purified and alkali-O2 oxidized lignin agglomerate at pH 5**

| | |
|---|---|
| Sample weight, g | 207.14 |
| Filtration time, min | 2 |
| Filtrate out, g | 207.14 |
| Filter cake, g | - |

Unless otherwise stated herein or clear from the context, any percentages referred to herein are expressed as percent by weight based on a total weight of the respective composition.

Unless otherwise stated, properties that have been experimentally measured or determined herein have been measured or determined at room temperature. Unless otherwise indicated, room temperature is 25°C.

Unless otherwise stated, properties that have been experimentally measured or determined herein have been measured or determined at atmospheric pressure.

As used herein, the term "about" refers to a value which is ± 5% of the stated value.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### CITATION LIST

### Patent Literature

WO2020161397

## Claims

1. A method for concentrating lignin comprising the steps of
- providing a solution comprising alkali lignin agglomerate colloids,
- increasing the pH of the solution, and
- concentrating the solution to form a lignin salt concentrate.

2. The method according to claim 1, wherein the pH is increased by addition of at least one alkali hydroxide, preferably the alkali hydroxide is selected from the group comprising sodium hydroxide, potassium hydroxide, lithium hydroxide and combinations thereof.

3. The method according to claim 1, wherein the pH is increased by addition of oxidized white liquor and/or white liquor produced in Kraft pulping process.

4. The method according to any of the preceding claims, wherein the pH is increased to at least 11, preferably to at least 12.

5. The method according to any of the preceding claims, wherein the dry solid content of the solution comprising the alkali lignin agglomerate colloids is in the range of 15 to 23 wt-%, preferably in the range of 18 to 20 wt-%.

6. The method according to any of the preceding claims, wherein the dry solid content of the lignin salt concentrate is at least 30 wt-%, for example at least 35 wt-%, such as at least 40 wt-%.

7. The method according to any of the preceding claims, wherein the concentrating step is performed by membrane filtration, wherein the nominal cut-off value of the membrane is at least 40 kDa.

8. The method according to any of the preceding claims, wherein the solution comprising alkali lignin agglomerate colloids is formed by the following steps:
a. providing an alkaline spent liquor from chemical cooking of lignocellulosic raw material,
b. decreasing the pH of the spent liquor,
c. filtering the spent liquor to form a filter cake comprising lignin,
d. mixing the filter cake into a dilution liquid to form a solution comprising alkali lignin agglomerate colloids.

9. The method according to any of the preceding claims, wherein the solution comprising the alkali lignin agglomerate colloids is subjected to membrane filtration with a membrane having a nominal cut-off value of at least 40 kDa prior increasing the pH of the solution.

10. The method according to any of the preceding claims, wherein the lignin salt concentrate is subjected to oxidation.

11. The method according to claim 10, wherein the oxidation is performed under an oxygen over pressure of less than 20 bars, such as in the range of 5 to 15 bars.

12. The method according to claims 10 or 11, wherein the temperature of the lignin salt concentrate is adjusted to below 100 °C prior to oxidation.

13. A product obtainable by the method according to any of the preceding claims.

14. The product according to claim 13, wherein the dry solid content of the product is at least 30 wt-%, for example at least 35 wt-%, such as at least 40 wt-%.

15. The product according to any of the claims 13 or 14, wherein the viscosity of the product is below 40 000 mPas, such as below 35 000 mPas, measured with Brookfield viscometer at 50 °C, 100 rpm and typically with spindle number 7, and the dry solid content is at least 30 wt-%.

## Patentansprüche

1. Verfahren zum Konzentrieren von Lignin, umfassend die folgenden Schritte:
- Bereitstellen einer Lösung, die Alkalilignin-Agglomeratkolloide umfasst,
- Erhöhen des pH-Werts der Lösung und
- Konzentrieren der Lösung zur Bildung eines Ligninsalzkonzentrats.

2. Verfahren nach Anspruch 1, wobei der pH-Wert durch Zugabe von mindestens einem Alkalihydroxid erhöht wird, vorzugsweise ist das Alkalihydroxid ausgewählt aus der Gruppe umfassend Natriumhydroxid, Kaliumhydroxid, Lithiumhydroxid und Kombinationen davon.

3. Verfahren nach Anspruch 1, wobei der pH-Wert durch Zugabe von oxidierter Weißlauge und/oder Weißlauge, die im Kraft-Zellstoffprozess hergestellt wird, erhöht wird.

4. Verfahren nach einem der vorstehenden Ansprüche, wobei der pH-Wert auf mindestens 11, vorzugsweise auf mindestens 12 erhöht wird.

5. Verfahren nach einem der vorstehenden Ansprüche, wobei der Trockensubstanzgehalt der Lösung, die die Alkalilignin-Agglomeratkolloide umfasst, im Bereich von 15 bis 23 Gew-%, vorzugsweise im Bereich von 18 bis 20 Gew-% liegt.

6. Verfahren nach einem der vorstehenden Ansprüche, wobei der Trockensubstanzgehalt des Ligninsalzkonzentrats mindestens 30 Gew.-%, zum Beispiel mindestens 35 Gew.-%, wie zum Beispiel mindestens 40 Gew.-% beträgt.

7. Verfahren nach einem der vorstehenden Ansprüche, wobei der Konzentrierungsschritt durch Membranfiltration erfolgt, wobei die nominelle Trenngrenze der Membran mindestens 40 kDa beträgt.

8. Verfahren nach einem der vorstehenden Ansprüche, wobei die Lösung, die Alkalilignin-Agglomeratkolloide umfasst, durch folgende Schritte hergestellt wird:
a. Bereitstellen einer alkalischen Ablauge aus dem chemischen Aufkochen von lignocellulosehaltigen Rohstoffen,
b. Senken des pH-Werts der Ablauge,
c. Filtrieren der verbrauchten Ablauge zur Bildung eines Filterkuchens, der Lignin umfasst,
d. Mischen des Filterkuchens mit einer Verdünnungsflüssigkeit zur Herstellung einer Lösung, die Alkalilignin-Agglomeratkolloide umfasst.

9. Verfahren nach einem der vorstehenden Ansprüche, wobei die Lösung, die die Alkalilignin-Agglomeratkolloide umfasst, vor Erhöhen des pH-Werts der Lösung einer Membranfiltration mit einer Membran unterzogen wird, die eine nominelle Trenngrenze von mindestens 40 kDa aufweist.

10. Verfahren nach einem der vorstehenden Ansprüche, wobei das Ligninsalzkonzentrat einer Oxidation unterzogen wird.

11. Verfahren nach Anspruch 10, wobei die Oxidation unter einem Sauerstoffüberdruck von weniger als 20 bar, wie zum Beispiel im Bereich von 5 bis 15 bar durchgeführt wird.

12. Verfahren nach Anspruch 10 oder 11, wobei die Temperatur des Ligninsalzkonzentrats vor der Oxidation auf unter 100 °C eingestellt wird.

13. Produkt, das durch das Verfahren nach einem der vorstehenden Ansprüche erhältlich ist.

14. Produkt nach Anspruch 13, wobei der Trockensubstanzgehalt des Produkts mindestens 30 Gew.-%, zum Beispiel mindestens 35 Gew.-%, wie zum Beispiel mindestens 40 Gew.-% beträgt.

15. Produkt nach einem der Ansprüche 13 oder 14, wobei die Viskosität des Produkts unter 40.000 mPas, wie zum Beispiel unter 35.000 mPas, gemessen mit einem Brookfield-Viskosimeter bei 50 °C, 100 U/min und typischerweise mit Spindel Nr. 7, liegt und der Trockensubstanzgehalt mindestens 30 % Gew.-% beträgt.

## Revendications

1. Procédé de concentration de lignine comprenant les étapes consistant à
- fournir une solution comprenant des colloïdes d'agglomérat de lignine alcaline,
- augmenter le pH de la solution, et
- concentrer la solution pour former un concentré de sel de lignine.

2. Procédé selon la revendication 1, dans lequel le pH est augmenté par l'ajout d'au moins un hydroxyde alcalin, de préférence l'hydroxyde alcalin est choisi dans le groupe comprenant l'hydroxyde de sodium, l'hydroxyde de potassium, l'hydroxyde de lithium et des combinaisons de ceux-ci.

3. Procédé selon la revendication 1, dans lequel le pH est augmenté par l'ajout de liqueur blanche oxydée et/ou de liqueur blanche produite par le procédé de pâte Kraft.

4. Procédé selon l'une quelconque des revendications précédentes, dans lequel le pH est augmenté à au moins 11, de préférence à au moins 12.

5. Procédé selon l'une quelconque des revendications précédentes, dans lequel la teneur en matière sèche de la solution comprenant les colloïdes d'agglomérat de lignine alcaline est dans la plage de 15 à 23 % en poids, de préférence dans la plage de 18 à 20 % en poids.

6. Procédé selon l'une quelconque des revendications précédentes, dans lequel la teneur en matière sèche du concentré de sel de lignine est au moins 30 % en poids, par exemple au moins 35 % en poids, telle qu'au moins 40 % en poids.

7. Procédé selon l'une quelconque des revendications précédentes, dans lequel l'étape de concentration est réalisée par filtration sur membrane, dans lequel la valeur de coupure nominale de la membrane est au moins 40 kDa.

8. Procédé selon l'une quelconque des revendications précédentes, dans lequel la solution comprenant des colloïdes d'agglomérat de lignine alcaline est formée par les étapes suivantes :
a. la fourniture d'une liqueur résiduaire alcaline issue de la cuisson chimique de matières premières lignocellulosiques,
b. la diminution du pH de la liqueur résiduaire,
c. la filtration de la liqueur résiduaire pour former un gâteau de filtration comprenant de la lignine,
d. le mélange du gâteau de filtration dans un liquide de dilution pour former une solution comprenant des colloïdes d'agglomérat de lignine alcaline.

9. Procédé selon l'une quelconque des revendications précédentes, dans lequel la solution comprenant les colloïdes d'agglomérat de lignine alcaline est soumise à une filtration sur membrane avec une membrane présentant une valeur de coupure nominale d'au moins 40 kDa avant d'augmenter le pH de la solution.

10. Procédé selon l'une quelconque des revendications précédentes, dans lequel le concentré de sel de lignine est soumis à une oxydation.

11. Procédé selon la revendication 10, dans lequel l'oxydation est effectuée sous une surpression d'oxygène inférieure à 20 bars, telle que dans la plage de 5 à 15 bars.

12. Procédé selon les revendications 10 ou 11, dans lequel la température du concentré de sel de lignine est ajustée à une valeur inférieure à 100 °C avant l'oxydation.

13. Produit pouvant être obtenu par le procédé selon l'une quelconque des revendications précédentes.

14. Produit selon la revendication 13, dans lequel la teneur en matière sèche du produit est au moins 30 % en poids, par exemple au moins 35 % en poids, telle qu'au moins 40 % en poids.

15. Produit selon l'une quelconque des revendications 13 ou 14, dans lequel la viscosité du produit est inférieure à 40 000 mPa·s, telle que inférieure à 35 000 mPa·s, mesurée avec un viscosimètre Brookfield à 50 °C, 100 tr/min et généralement avec une broche n° 7, et la teneur en matière sèche est au moins 30 % en poids.
